# EUROPÄISCHE PATENTSCHRIFT

(11) **EP 3 491 693 B1**
(45) Veröffentlichungstag und Bekanntmachung des Hinweises auf die Patenterteilung: **23.09.2020**
(21) Anmeldenummer: 17752323.0
(22) Anmeldetag: 28.07.2017
(51) Int. Cl.: H01M 8/04537, H01M 8/04828, H01M 8/249

(54) **BRENNSTOFFZELLENSYSTEM UND VERFAHREN ZUM BETRIEB EINES BRENNSTOFFZELLENSYSTEMS**
FUEL CELL SYSTEM AND METHOD FOR OPERATING A FUEL CELL SYSTEM
SYSTÈME DE PILES À COMBUSTIBLE ET PROCÉDÉ PERMETTANT DE FAIRE FONCTIONNER UN SYSTÈME DE PILES À COMBUSTIBLE

(30) Priorität: 29.07.2016 DE 102016114081
(43) Veröffentlichungstag der Anmeldung: 05.06.2019
(73) Patentinhaber: Proton Motor Fuel Cell GmbH, 82178 Puchheim (DE)
(72) Erfinder: REUM, Mathias, 80333 München (DE)
(74) Vertreter: Schmitt-Nilson Schraud Waibel Wohlfrom Patentanwälte Partnerschaft mbB
(86) Internationale Anmeldenummer: PCT/EP2017/069217
(87) Internationale Veröffentlichungsnummer: WO 2018/020029

(56) Entgegenhaltungen:
- DE-A1- 10 010 985
- DE-A1-102004 017 848
- DE-A1-102009 056 029

## Beschreibung

Die Erfindung betrifft ein Brennstoffzellensystem mit einer Mehrzahl von Brennstoffzellenmodulen sowie ein Verfahren zum Betrieb eines solchen Brennstoffzellensystems.

Brennstoffzellen erzeugen elektrische Energie aus Wasserstoff und Sauerstoff. Sauerstoff wird in der Regel in Form von Luft zugeführt, und Wasserstoff wird aus einem Vorratsbehälter zugeführt oder auch vor Ort erzeugt, beispielsweise aus Methanol. Die Brennstoffzellen sind typischerweise zu einem oder mehreren Brennstoffzellenstapeln zusammengefasst und bilden zusammen mit zahlreichen Peripherieelementen, wie Leitungen zur Zuführung von frischen Betriebsgasen und Kühlwasser, zur Abführung und / oder Rezirkulierung von gebrauchten Betriebsgasen und Kühlwasser, Sensoren, Ventilen, Steuereinrichtungen, Schaltern, Heizeinrichtungen, etc., ohne die der Betrieb der Brennstoffzellen nicht möglich wäre, ein Brennstoffzellenmodul. Ein Teil dieser Komponenten ist mit schützenden Abdeckungen, Gehäusen oder Ummantelungen ausgestattet, und alle Komponenten oder zumindest die meisten der Komponenten sind möglichst kompakt zusammengebaut und gemeinsam mit den Brennstoffzellen in einem Gehäuse untergebracht.

Mehrere solcher Brennstoffzellenmodule können zu einem Brennstoffzellensystem zusammengefasst sein, in dem die Brennstoffzellenmodule elektrisch parallel oder in Reihe geschaltet sind, um eine an das Brennstoffzellensystem angeschlossene elektrische Last mit einer Versorgungsspannung und einem Laststrom zu versorgen. Durch Vorsehen mehrerer Brennstoffzellenmodule in einem Brennstoffzellensystem kann eine vergleichsweise einfache Anpassung an spezifische Spannungs- und/oder Leistungsanforderungen der elektrischen Last vorgenommen werden. Beispielsweise kann durch Reihenschaltung mehrerer Brennstoffzellenmodule eine höhere Betriebsspannung und eine höhere Leistungsabgabe bereitgestellt werden.

Es ist dabei meist ein Ziel beim Betreiben der Last durch das Brennstoffzellensystem, stark wechselnde Betriebszustände der Brennstoffzellen zu vermeiden, so dass es keiner aufwändigen, schnellreagierenden Steuerung der Zufuhr der chemischen Energieträger bedarf und auch die Lebensdauer der Brennstoffzellen durch starke Lastschwankungen nicht negativ beeinflusst wird.

In DE 10 2004 017 848 A1 ist ein Verfahren zum Betrieb eines Brennstoffzellensystems mit einer Vielzahl von Brennstoffzellenstapeln in Reihenschaltung beschrieben, bei dem bei einem verringerten Strombedarf eine Anzahl von zu umgehenden Brennstoffzellenstapeln als eine Funktion des verringerten Strombedarfs bestimmt wird und ein bestimmter zu umgehender Brennstoffzellenstapel oder bestimmte zu umgehende Brennstoffzellenstapel bestimmt werden. Jeder der Vielzahl von Brennstoffzellenstapeln wird hinsichtlich eines Fehlerzustands und/oder einer Änderung der Lastanforderung überwacht. Zumindest ein Brennstoffzellenstapel wird umgangen, wenn eine verringerte Lastanforderung detektiert wird, und wieder zugeschaltet, wenn eine erhöhte Lastanforderung detektiert wird.

In DE 100 10 985 A1 wird ein Verfahren zum Betrieb eines Brennstoffzellensystems beschrieben, bei dem einzelne Brennstoffzellen und/oder Stacks in Abhängigkeit von einer gewünschten Ausgangsleistung des Brennstoffzellensystems durch Überbrücken und Nicht-Überbrücken elektrisch ab- und zugeschaltet werden. Ziel ist es, für einen hohen Wirkungsgrad eines Brennstoffzellensystems, das System mit hohen Stromdichten zu betreiben, wobei zum Abdecken des jeweiligen Leistungsbedarfs im Wesentlichen nur eine entsprechende Anzahl von Brennstoffzellen und/oder Stacks aktiv ist, die ausreicht, um beim Betrieb mit hohen Stromdichten die geforderte Leistung zu erbringen. Die restlichen Brennstoffzellen bzw. Stacks sind nicht aktiv und elektrisch abgeschaltet, nämlich überbrückt.

In DE 10 1009 056 029 A1 wird ein Verfahren zum Betrieb eines Brennstoffzellensystems beschrieben, bei dem verhindert werden soll, dass der Brennstoffzellenstapel aufgrund zu niedriger Spannung abgeschaltet wird oder in einen Zustand mit beschränkter Lastfreigabe versetzt wird, welcher nur durch ein Zurücksetzen wieder verlassen werden kann. Es soll so ein zuverlässiges Betriebsverfahren geschaffen werden, bei welchem in Abhängigkeit von dem Spannungszustand des Brennstoffzellenstapels die an diesen Brennstoffzellenstapel gestellte Teilstromanforderung bestimmt wird. Insbesondere soll vermieden werden, dass durch fortgesetztes Liefern eines vergleichsweise hohen Stroms durch diesen Brennstoffzellenstapel die Spannung des Brennstoffzellenstapels auf ein unerwünscht niedriges Niveau absinkt. So kann von dem Brennstoffzellensystem als Ganzes eine Gesamtstromanforderung gedeckt werden, wie sie etwa beim vollen Durchtreten eines Fahrpedals eines Fahrzeugs gegeben ist.

Eine Aufgabe der vorliegenden Erfindung ist es, ein Brennstoffzellensystem mit mehreren Brennstoffzellenmodulen sowie ein Verfahren zum Betrieb eines solchen Brennstoffzellensystems anzugeben, bei dem die Brennstoffzellen mit einer hohen Lebensdauer betrieben werden können.

Die Erfindung betrifft ein Brennstoffzellensystem mit einer Mehrzahl von Brennstoffzellenmodulen sowie ein Verfahren zum Betrieb eines solchen Brennstoffzellensystems gemäß den unabhängigen Patentansprüchen. Vorteilhafte Aus- und Weiterbildungen sind in den Unteransprüchen angegeben.

Gemäß einem ersten Aspekt betrifft die Erfindung ein Brennstoffzellensystem, aufweisend eine Mehrzahl von Brennstoffzellenmodulen, die zu einer Brennstoffzellengruppe verschaltet sind, die einen ersten und zweiten Versorgungsanschluss aufweist, die dafür konfiguriert sind, an eine elektrische Last angeschlossen zu werden, eine Messeinrichtung, die mit den Brennstoffzellenmodulen verbunden ist und eingerichtet ist, einen Laststrom der jeweiligen Brennstoffzellenmodule zu messen, und eine Steuerungseinrichtung zur Erfassung eines jeweiligen Betriebszustands der Brennstoffzellenmodule anhand des von der Messeinrichtung gemessenen Laststroms des jeweiligen Brennstoffzellenmoduls, und die mit den Brennstoffzellenmodulen verbunden ist zur Steuerung des Betriebs der Brennstoffzellenmodule. Hierbei ist die Steuerungseinrichtung eingerichtet, einen von der Last angeforderten Laststrom in einem Volllastbetrieb durch Betrieb aller Brennstoffzellenmodule bereitzustellen, und einen von der Last angeforderten Laststrom in einem Teillastbetrieb der Last durch Betrieb aller oder eines Teils der Brennstoffzellenmodule bereitzustellen. Weiter ist die Steuerungseinrichtung eingerichtet zu detektieren, ob sich der Betriebszustand der Brennstoffzellenmodule in einem jeweiligen Teillastbereich des jeweiligen Brennstoffzellenmoduls befindet, welcher durch eine untere Grenze oberhalb eines Laststroms Null und eine obere Grenze unterhalb eines Volllaststroms definiert ist. Auch ist die Steuerungseinrichtung eingerichtet, einen von der Last angeforderten Laststrom in einem ersten Teillastbetrieb der Last durch Betrieb aller Brennstoffzellenmodule der Brennstoffzellengruppe bereitzustellen derart, dass sich alle Brennstoffzellenmodule der Brennstoffzellengruppe im jeweiligen Teillastbereich des jeweiligen Brennstoffzellenmoduls befinden.

Die Erfindung bietet den vorteilhaften Effekt, dass je nach Leistungsanforderung der Last der Laststrom bzw. die abzugebende Leistung so auf die einzelnen Brennstoffzellenmodule der Brennstoffzellengruppe verteilt werden kann, dass ihre Lebensdauer optimiert werden kann. Das erfindungsgemäße Leistungsmanagement ist somit in erster Linie im Teillastbetrieb der Last anwendbar, in dem nicht die volle Leistung (Nennleistung) aller Brennstoffzellenmodule gleichzeitig bereitgestellt werden muss. Vielmehr werden alle Brennstoffzellenmodule der Brennstoffzellengruppe in einem Teillastbetrieb entsprechend der Lastanfrage gleichermaßen im vorzugsweise für sie hinsichtlich Lebensdauer vorteilhaften Teillastbereich betrieben. Dabei kann ein zu erreichendes Ziel des Leistungsmanagements (welches in der Steuerungseinrichtung implementiert ist) sein, alle in dem Brennstoffzellensystem bzw. in der Brennstoffzellengruppe befindlichen Brennstoffzellenmodule gleich oder näherungsweise gleich abzunutzen und dabei jedes Modul so oft wie möglich in einem für ihn günstigen Teillastbereich zu betreiben.

Aufgrund der Erkenntnis der Erfinder, dass eine Brennstoffzelle in einem solchen Teillastbereich eine elektrische Leistung mit niedriger Degradationsrate erzeugt aufgrund elektrochemischer Vorgänge, die nur einen vergleichsweise geringen Verschleiß von Komponenten des Brennstoffzellenmoduls zur Folge haben, kann dieser Bereich auch als "Wohlfühlbereich" einer Brennstoffzelle bezeichnet werden. Andererseits hat eine Brennstoffzelle außerhalb eines solchen "Wohlfühlbereichs" auch Betriebsbereiche, von denen die Erfinder erkannt haben, dass sie höhere Degradationsraten aufweisen und es sich auf die Lebensdauer der Brennstoffzellen negativ auswirkt, wenn die Brennstoffzellen vergleichsweise lange in diesen Betriebsmodi betrieben werden. Erfindungsgemäß wird ein solcher vorteilhafter Teillastbereich ("Wohlfühlbereich" mit niedrigerer Degradationsrate) durch eine untere Grenze oberhalb eines Laststroms Null und eine obere Grenze unterhalb eines Volllaststroms definiert.

Insgesamt kann somit mit Hilfe der Erfindung ein Brennstoffzellensystem mit mehreren Brennstoffzellenmodulen sowie ein Verfahren zum Betrieb eines solchen Brennstoffzellensystems bereitgestellt werden, bei dem die Brennstoffzellen mit einer vergleichsweise hohen Lebensdauer betrieben werden können.

Bei der Verwendung von gleichartigen Brennstoffzellen bzw. Brennstoffzellenmodulen können die günstigen Teillastbereiche für die jeweiligen Brennstoffzellenmodule der Brennstoffzellengruppe im wesentlichen für alle Brennstoffzellenmodule der Brennstoffzellengruppe gleich definiert sein, das heißt die jeweiligen Teillastbereiche der Brennstoffzellenmodule der Brennstoffzellengruppe weisen eine im wesentlichen gleiche untere Grenze und gleiche obere Grenze auf. Die jeweiligen Teillastbereiche können jedoch auch unterschiedlich definiert sein, das heißt mit voneinander unterschiedlicher unterer bzw. oberer Grenze, z.B. bei Verwendung von unterschiedlichen Brennstoffzellentypen in den Brennstoffzellenmodulen der Brennstoffzellengruppe, die unterschiedliche "Wohlfühlbereiche" aufweisen. Auch kann für einen Teil der Brennstoffzellenmodule, welche untereinander einen gleichen Brennstoffzellentyp aufweisen, ein erster Teillastbereich und für einen anderen Teil der Brennstoffzellenmodule, welche einen anderen untereinander gleichen Brennstoffzellentyp aufweisen, ein zweiter Teillastbereich definiert werden, usw.

Gemäß einer Ausführungsform ist der jeweilige Teillastbereich des jeweiligen Brennstoffzellenmoduls durch eine untere Laststromdichte oberhalb einer Laststromdichte Null und eine obere Laststromdichte unterhalb einer Volllaststromdichte definiert.

Gemäß einer Ausführungsform beträgt die untere Laststromdichte näherungsweise 0,35 A/cm² und die obere Laststromdichte näherungsweise 0,75 A/cm².

Gemäß einer Ausführungsform ist die Steuerungseinrichtung eingerichtet, einen von der Last angeforderten Laststrom in einem unteren zweiten Teillastbetrieb der Last durch Betrieb aller Brennstoffzellenmodule bereitzustellen derart, dass sich alle Brennstoffzellenmodule in einem Betriebszustand an der Untergrenze des jeweiligen Teillastbereichs des jeweiligen Brennstoffzellenmoduls befinden.

Insbesondere ist die Steuerungseinrichtung eingerichtet, einen von der Last angeforderten Laststrom in einem gegenüber dem zweiten Teillastbetrieb noch niedrigeren dritten Teillastbetrieb der Last durch Betrieb nur eines Teils der Brennstoffzellenmodule der Brennstoffzellengruppe bereitzustellen derart, dass der Betriebszustand des betriebenen Teils der Brennstoffzellenmodule sich innerhalb des jeweiligen Teillastbereichs des jeweiligen Brennstoffzellenmoduls befindet und der nicht betriebene Teil der Brennstoffzellenmodule abgeschaltet ist.

Gemäß einer Ausführungsform ist die Steuerungseinrichtung eingerichtet zu detektieren, ob sich der Betriebszustand eines der Brennstoffzellenmodule in dem Teillastbereich des betreffenden Brennstoffzellenmoduls befindet, und im Fall, dass detektiert wird, dass sich der Betriebszustand des Brennstoffzellenmoduls außerhalb des Teillastbereichs des betreffenden Brennstoffzellenmoduls befindet, eines oder mehrere der Brennstoffzellenmodule der Brennstoffzellengruppe durch die Steuerungseinrichtung abgeschaltet wird.

Gemäß einer Ausführungsform ist in der Steuerungseinrichtung eine jeweilige Laststrom-Leistungskorrelation für den Brennstoffzellentyp der jeweiligen Brennstoffzellenmodule hinterlegt, um den Betriebszustand des jeweiligen Brennstoffzellenmoduls zu detektieren. Vorteilhafterweise ist in der Steuerungseinrichtung die Laststrom-Leistungskorrelation in Form einer Laststrom-Leistungskennlinie hinterlegt.

Gemäß einer weiteren Ausführungsform ist die Steuerungseinrichtung eingerichtet, eine Betriebszeit eines oder mehrerer der Brennstoffzellenmodule über verschiedene Lastbereiche aufzuzeichnen, wobei sie diese aufgezeichneten Daten verarbeitet um festzulegen, welches der Brennstoffzellenmodule bei einer aktuellen Lastanforderung im Teillastbetrieb der Last betrieben oder nicht betrieben wird.

Vorteilhafterweise ist die Steuerungseinrichtung eingerichtet festzulegen, welches der Brennstoffzellenmodule betrieben oder nicht betrieben wird, derart, dass die Betriebszeiten der Brennstoffzellenmodule über die verschiedenen Lastbereiche angeglichen werden.

Gemäß einer Ausführungsform ist die Steuerungseinrichtung eingerichtet, eine produzierte Energiemenge der jeweiligen Brennstoffzellenmodule zu berechnen. Hierbei kann die Steuerungseinrichtung so eingerichtet sein, dass wenigstens für einen Teil der Brennstoffzellenmodule eine Rangfolge hinsichtlich der jeweils produzierten Energiemenge berechnet wird.

Insbesondere kann die Steuerungseinrichtung eingerichtet sein zu detektieren, ob sich der Betriebszustand eines der Brennstoffzellenmodule in dem Teillastbereich des betreffenden Brennstoffzellenmoduls befindet, und im Fall, dass detektiert wird, dass sich der Betriebszustand des Brennstoffzellenmoduls außerhalb des Teillastbereichs des betreffenden Brennstoffzellenmoduls befindet, eines oder mehrere der Brennstoffzellenmodule der Brennstoffzellengruppe mit höchster produzierter Energiemenge durch die Steuerungseinrichtung abgeschaltet wird.

Gemäß einem anderen Aspekt betrifft die Erfindung ein Verfahren zum Betrieb eines Brennstoffzellensystems, welches eine Mehrzahl von Brennstoffzellenmodulen aufweist, die zu einer Brennstoffzellengruppe verschaltet sind, die einen ersten und zweiten Versorgungsanschluss aufweist, die dafür konfiguriert sind, an eine elektrische Last angeschlossen zu werden. Hierbei weist das Verfahren die folgenden Schritte auf:
- Messung eines Laststroms der jeweiligen Brennstoffzellenmodule,
- Erfassung eines jeweiligen Betriebszustands der Brennstoffzellenmodule anhand des gemessenen Laststroms des jeweiligen Brennstoffzellenmoduls,
- Bereitstellung eines von der Last angeforderten Laststroms in einem Volllastbetrieb durch Betrieb aller Brennstoffzellenmodule und eines von der Last angeforderten Laststroms in einem Teillastbetrieb der Last durch Betrieb aller oder eines Teils der Brennstoffzellenmodule,
- wobei detektiert wird, ob sich der Betriebszustand eines Brennstoffzellenmoduls in einem jeweiligen Teillastbereich des jeweiligen Brennstoffzellenmoduls befindet, welcher durch eine untere Grenze oberhalb eines Laststroms Null und eine obere Grenze unterhalb eines Volllaststroms definiert ist,
- wobei ein von der Last angeforderter Laststrom in einem ersten Teillastbetrieb der Last durch Betrieb aller Brennstoffzellenmodule der Brennstoffzellengruppe bereitgestellt wird derart, dass sich alle Brennstoffzellenmodule der Brennstoffzellengruppe im jeweiligen Teillastbereich des jeweiligen Brennstoffzellenmoduls befinden.

Die oben und im folgenden beschriebenen Funktionen der Steuerungseinrichtung können in analoger Weise auch bei einem solchen Verfahren als jeweilige Verfahrensschritte angewandt werden. Alle in dieser Offenbarung beschriebenen Ausführungsformen und Beispiele sind analog auch auf ein derartiges Betriebsverfahren anwendbar.

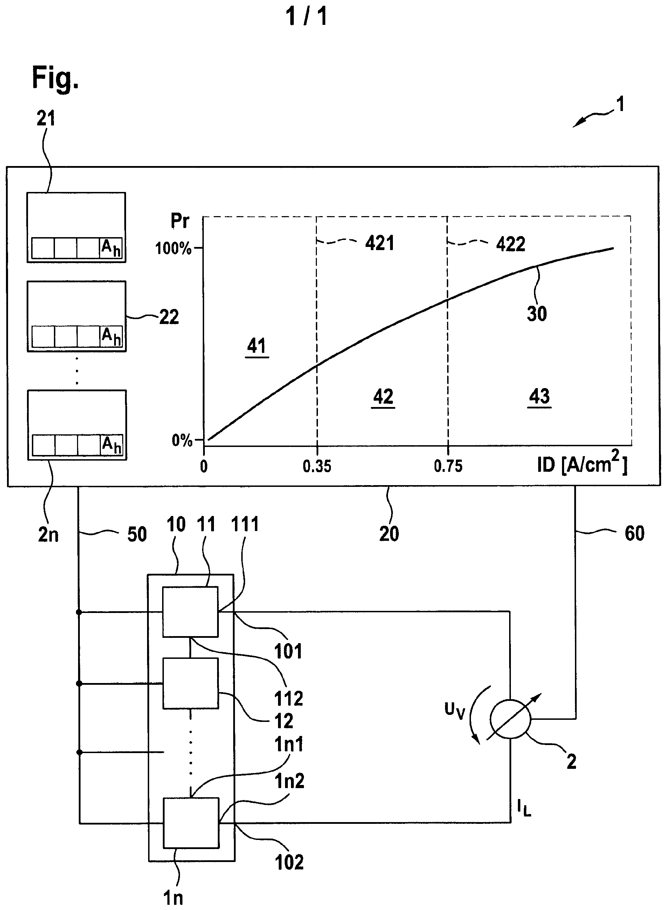

Im folgenden wird die Erfindung in Form eines Ausführungsbeispiels anhand der einzigen Figur näher erläutert.

Die Figur zeigt eine beispielhafte Ausführungsform eines Brennstoffzellensystems gemäß Aspekten der Erfindung.

Ein Brennstoffzellensystem 1 weist eine Mehrzahl von Brennstoffzellenmodulen 11, 12, ..., 1n auf. Diese sind zu einer Brennstoffzellengruppe 10 verschaltet. Innerhalb der Brennstoffzellengruppe 10 können die Brennstoffzellenmodule parallel oder seriell, oder in einer Kombination aus beiden, verschaltet sein. Die Brennstoffzellengruppe 10 weist einen ersten elektrischen Versorgungsanschluss 101 und einen zweiten elektrischen Versorgungsanschluss 102 auf, die dafür konfiguriert sind, an eine elektrische Last 2 angeschlossen zu werden. Im angeschlossenen Zustand liegt an den Versorgungsanschlüssen 101 und 102 der Brennstoffzellengruppe 10 die Betriebsspannung U_{V} zur Versorgung der Last 2 an. Die Last 2 kann im allgemeinen beispielsweise einen oder mehrere elektrische Verbraucher, Stromrichter und/oder andere elektrische Komponenten eines elektrischen Lastkreises enthalten und steht stellvertretend für elektrische Komponenten, die auf der Verbrauchsseite mit der Brennstoffzellengruppe 10 zur Abnahme eines Laststromes verbunden sind.

Die Brennstoffzellenmodule 11, 12, ..., 1n selbst haben jeweils zwei elektrische Versorgungsanschlüsse, an denen im Betrieb des jeweiligen Brennstoffzellenmoduls eine elektrische Modulspannung anliegt, um einen Laststrom zu erzeugen. Die Brennstoffzellengruppe 10 kann zwei oder mehrere Brennstoffzellenmodule 11 - 1n aufweisen, die in bekannter Weise parallel oder in Serie (wie in der Figur dargestellt) geschaltet sein können, um die elektrische Last 2 mit einem Laststrom zu versorgen. Auch ist eine teilweise parallele und serielle Verschaltung möglich, wie sie dem Fachmann in vielfältiger Art bekannt sind. Beispielsweise weist das Brennstoffzellenmodul 11 elektrische Versorgungsanschlüsse 111, 112 auf, wobei in dieser Ausführungsform der Versorgungsanschluss 111 den Versorgungsanschluss 101 der Brennstoffzellengruppe 10 bildet, der an der Last 2 angeschlossen ist, und der Versorgungsanschluss 112 mit einem elektrischen Versorgungsanschluss des Brennstoffzellenmoduls 12 verbunden ist. Entsprechend weisen die anderen Brennstoffzellenmodule der Brennstoffzellengruppe 10 elektrische Versorgungsanschlüsse auf, die entsprechend der gewählten Verschaltung (seriell oder parallel) mit einem jeweiligen Versorgungsanschluss eines anderen Brennstoffzellenmoduls verbunden sind. Entsprechend weist das Brennstoffzellenmodul 1n elektrische Versorgungsanschlüsse 1n1 und 1n2 auf, wobei in dieser Ausführungsform der Versorgungsanschluss 1n2 den anderen Versorgungsanschluss 102 der Brennstoffzellengruppe 10 bildet, der an der Last 2 angeschlossen ist. Durch Reihenschaltung der Brennstoffzellenmodule 11 - 1n kann eine Betriebsspannung U_{V} an der Last 2 erzeugt werden, welche ein Vielfaches der Einzelspannungen der Brennstoffzellenmodule beträgt. Zudem ist eine Leistungsversorgung der Last 2 möglich, die im Volllastbetrieb der Summe der Leistungen der Brennstoffzellenmodule 11 - 1n der Brennstoffzellengruppe 10 entspricht.

Das Brennstoffzellensystem 1 weist außerdem eine Steuerungseinrichtung 20 für die Brennstoffzellengruppe 10 auf. Diese dient einerseits zur Erfassung eines jeweiligen Betriebszustands der Brennstoffzellenmodule 11 - 1n anhand eines gemessenen Laststroms des jeweiligen Brennstoffzellenmoduls. Andererseits ist die Steuerungseinrichtung 20 mit den Brennstoffzellenmodulen 11 - 1n der Brennstoffzellengruppe 10 verbunden zur Steuerung des Betriebs der Brennstoffzellenmodule 11 - 1n. Hierzu ist die Steuerungseinrichtung 20 über die elektrische Leitung 50 mit den Brennstoffzellenmodulen 11 - 1n elektrisch verbunden und kann diese für den Betrieb im Brennstoffzellensystem 1 individuell einschalten, ausschalten oder auch deren elektrische Parameter, wie Modul-Ausgangsspannung, -strom und/oder Leistungsabgabe individuell steuern oder regeln. Der Fachmann kann hierzu Steuerungs- bzw. Regelungsmechanismen im Zusammenspiel zwischen der Steuerungseinrichtung 20 und den Brennstoffzellenmoden 11 - 1n anwenden, die im Stand der Technik hinreichend bekannt sind. Beispielsweise wird von der Steuerungseinrichtung 20 zur Steuerung des jeweiligen Modulausgangsstroms, und damit des jeweiligen Betriebsbereichs, die Zufuhr der chemischen Energieträger (in der Figur nicht dargestellt) über die Leitung 50 entsprechend individuell gesteuert.

Weiterhin ist eine Messeinrichtung vorgesehen, die mit den Brennstoffzellenmodulen 11 - 1n der Brennstoffzellengruppe 10 verbunden ist und eingerichtet ist, einen Laststrom der jeweiligen Brennstoffzellenmodule 11 - 1n zu messen. Im vorliegenden Ausführungsbeispiel sind in der Steuerungseinrichtung 20 einzelne Messmodule 21 - 2n vorgesehen, die in Hardware oder Software, oder in Kombination daraus, realisiert sein können, welche einerseits den Laststrom des jeweiligen Brennstoffzellenmoduls messen als auch in diesem Beispiel eine zugehörige Betriebszeit. Auf diese Art kann ein Parameter (z.B. Laststrom über eine bestimmte Betriebsdauer in Ah) berechnet werden, auf dessen Grundlage eine produzierte Energiemenge des jeweiligen Brennstoffzellenmoduls 11 - 1n berechnet werden kann. Im vorliegenden Ausführungsbeispiel sind die Messmodule 21 - 2n Teil der Steuerungseinrichtung 20, beispielsweise in Form eines oder mehrerer Berechnungsmodule, mit denen der Mikroprozessor der Steuerungseinrichtung 20 die jeweils benötigten Parameter berechnet. Über die Leitung 50 werden entsprechende physikalisch gemessene Messsignale den Messmodulen 21 - 2n zur Verfügung gestellt, wie z.B. Laststrom und Betriebsspannung. Das Messmodul 21 misst bzw. berechnet die gewünschten Parameter in Bezug auf Brennstoffzellenmodul 11, das Messmodul 22 in Bezug auf Brennstoffzellenmodul 12, usw. Die Messmodule 21 - 2n können mit geeigneten Strom-, Spannungs- und/oder Leistungsmessvorrichtungen (in der Figur nicht explizit dargestellt) über die Leitung 50 oder eine andere Verbindung gekoppelt sein oder diese enthalten, und/oder entsprechende Zeitmessvorrichtungen implementiert haben oder damit verbunden sein, etc., um die entsprechenden physikalischen Parameter zu messen und zu verarbeiten.

In der Steuerungseinrichtung 20 ist weiterhin eine Laststrom-Leistungskorrelation 30 für den Brennstoffzellentyp der jeweiligen Brennstoffzellenmodule 11 - 1n der Brennstoffzellengruppe 10 hinterlegt. In einem Fall, in dem alle Brennstoffzellenmodule 11 -1n den gleichen Brennstoffzellentyp aufweisen, ist es ausreichend, nur eine Laststrom-Leistungskorrelation 30 für alle Brennstoffzellenmodule zu hinterlegen. Werden jedoch verschiedene Brennstoffzellentypen in der Brennstoffzellengruppe 10 verwendet, ist es sinnvoll, für jeden Brennstoffzellentyp jeweils eine entsprechende Laststrom-Leistungskorrelation 30 zu speichern.

Beispielsweise ist die Laststrom-Leistungskorrelation in Form einer Laststrom-Leistungskennlinie 30 hinterlegt, wie in der Figur beispielhaft dargestellt. In der vorliegenden Ausführungsform kennzeichnet die Laststrom-Leistungskennlinie 30 eine relative Leistungsabgabe Pr des jeweiligen Brennstoffzellenmoduls (zwischen 0% und 100% bezogen auf die Nennleistung des Brennstoffzellenmoduls) in Abhängigkeit der Laststromdichte ID (Laststrom bezogen auf die elektrochemische Reaktionsfläche der Brennstoffzelle, gemessen in A/cm²).

Anhand der Laststrom-Leistungskennlinie 30 lässt sich der Betriebszustand des jeweiligen Brennstoffzellenmoduls 11 - 1n detektieren. Erfindungsgemäß weist ein jeweiliges Brennstoffzellenmodul mehrere Betriebsbereiche auf, etwa einen unteren Teillastbereich 41, einen mittleren Teillastbereich 42 und einen obere Teillastbereich 43. Insbesondere ist der jeweilige mittlere Teillastbereich 42 durch eine untere Grenze 421 oberhalb eines Laststroms Null und eine obere Grenze 422 unterhalb eines Volllaststroms definiert. Im vorliegenden Ausführungsbeispiel der Laststrom-Leistungskennlinie 30 ist der jeweilige Teillastbereich 42 durch eine untere Laststromdichte 421 oberhalb einer Laststromdichte Null und eine obere Laststromdichte 422 unterhalb einer Volllaststromdichte definiert.

Der Teillastbereich 42 wird so definiert, dass die betreffenden Brennstoffzellen des Moduls in diesem Teillastbereich eine elektrische Leistung mit niedriger Degradationsrate erzeugen. Wie oben beschreiben, kann dieser Bereich 42 auch als "Wohlfühlbereich" einer Brennstoffzelle bezeichnet werden. Die anderen Betriebsbereiche 41 und 43 weisen höhere Degradationsraten auf, wobei es sich auf die Lebensdauer der Brennstoffzellen negativ auswirkt, wenn die Brennstoffzellen länger in diesen Betriebsmodi 41, 43 betrieben werden.

Zur Definition eines vorteilhaften Teillastbereichs 42 beträgt die untere Laststromdichte 421 näherungsweise 0,35 A/cm² und die obere Laststromdichte 422 näherungsweise 0,75 A/cm². Ein Betrieb des Brennstoffzellenmoduls mit Laststromdichten innerhalb dieses Bereichs 42 hat vergleichsweise geringe Degradationsraten zur Folge, so dass es erstrebenswert ist, die Brennstoffzellen möglichst lange in diesem Bereich zu betreiben. Als potenziell schädliche Betriebsmodi definiert werden in der vorliegenden Ausführungsform Lastbereiche unterhalb einer Laststromdichte von 0,35 A/cm² (vor allem aufgrund zu hoher Zellspannungen und Kondensation von Flüssigwasser) sowie oberhalb einer Laststromdichte von 0,75 A/cm² (insbesondere aufgrund lokaler Temperaturspitzen und Massentransportprobleme).

Die Steuerungseinrichtung 20 steuert nun erfindungsgemäß das Brennstoffzellensystem 1 so, dass ein von der Last 2 angeforderter Laststrom I_{L} in einem Volllastbetrieb durch Betrieb aller Brennstoffzellenmodule 11 - 1n der Brennstoffzellengruppe 10 bereitgestellt wird. Dem gegenüber wird ein von der Last 2 angeforderten Laststrom I_{L} in einem Teillastbetrieb der Last durch Betrieb aller oder nur eines Teils der Brennstoffzellenmodule 11 - 1n der Brennstoffzellengruppe 10 bereitgestellt, je nach Höhe des angeforderten Laststroms. Ein oder mehrere Parameter, welche für eine Lastanforderung (mithin den angeforderten Laststrom) der Last 2 kennzeichnend sind, werden über die Leitung 60 an die Steuerungseinrichtung 20 übermittelt.

Weiter detektiert die Steuerungseinrichtung 20, ob sich der Betriebszustand der Brennstoffzellenmodule 11 - 1n in dem jeweiligen Teillastbereich 42 ("Wohlfühlbereich") des jeweiligen Brennstoffzellenmoduls befindet. Sollte die Lastanforderung in einem ersten Teillastbetrieb der Last geringer sein als die Nennlast (beispielsweise 40-60% der Nennlast betragen), steuert die Steuerungseinrichtung 20 die Brennstoffzellenmodule 11 - 1n (beispielsweise die Zufuhr deren chemischer Energieträger) so, dass der von der Last 2 angeforderte Laststrom I_{L} durch Betrieb aller Brennstoffzellenmodule 11 - 1n der Brennstoffzellengruppe 10 bereitgestellt wird, und zwar derart, dass sich alle Brennstoffzellenmodule 11 - 1n der Brennstoffzellengruppe 10 im jeweiligen Teillastbereich 42 ("Wohlfühlbereich") befinden.

Wird hingegen ein angeforderter Laststrom I_{L} in einem niedrigeren zweiten Teillastbetrieb der Last (etwa im Bereich von 30-40% der Nennlast) detektiert, so wird der Laststrom I_{L} immer noch durch Betrieb aller Brennstoffzellenmodule 11 - 1n der Brennstoffzellengruppe 10 derart bereitgestellt, dass sich alle Brennstoffzellenmodule 11 - 1n der Brennstoffzellengruppe 10 in einem Betriebszustand an der Untergrenze 421 des Teillastbereichs 42 befinden. Somit werden immer noch alle Brennstoffzellenmodule der Brennstoffzellengruppe 10, selbst bei geringerer Teillast, im jeweiligen "Wohlfühlbereich" betrieben.

Erst wenn ein angeforderter Laststrom I_{L} in einem gegenüber dem zweiten Teillastbetrieb noch niedrigeren dritten Teillastbetrieb der Last (etwa unterhalb von 30% der Nennlast) detektiert wird, steuert die Steuerungseinrichtung 20 die Brennstoffzellenmodule so, dass sich der Betriebszustand des noch betriebenen Teils der Brennstoffzellenmodule 11 - 1n innerhalb des Teillastbereichs 42 befindet, während der nicht betriebene Teil der Brennstoffzellenmodule 11 - 1n abgeschaltet wird. Somit wird weiterhin gewährleistet, das möglichst viele Brennstoffzellenmodule im für sie günstigen Teillastbereich 42 betrieben werden.

Weiterhin kann die Steuerungseinrichtung 20 eingerichtet sein, eine Betriebszeit eines oder mehrerer der Brennstoffzellenmodule 11 - 1n über die verschiedenen Lastbereiche 41, 42, 43 aufzuzeichnen und diese aufgezeichneten Daten zu verarbeiten, um festzulegen, welches der Brennstoffzellenmodule 11 - 1n bei einer aktuellen Lastanforderung im Teillastbetrieb der Last 2 betrieben oder nicht betrieben wird.

Beispielsweise werden die Brennstoffzellenmodule 11 - 1n so betrieben, dass die Betriebszeiten der Brennstoffzellenmodule über die verschiedenen Lastbereiche 41, 42, 43 angeglichen werden. Somit kann eine gleichmäßigere Degradationsrate bzw. Lebensdauer über alle Brennstoffzellenmodule hinweg erreicht werden.

Zusätzlich kann Steuerungseinrichtung 20 so eingerichtet sein, dass sie wenigstens für einen Teil der Brennstoffzellenmodule 11 - 1n eine Rangfolge hinsichtlich der jeweils produzierten Energiemenge berechnet. Wenn sich z.B. der Betriebszustand eines der Brennstoffzellenmodule 11 - 1n außerhalb Teillastbereichs 42 des betreffenden Brennstoffzellenmoduls befindet, wird das oder werden die Brennstoffzellenmodule 11 - 1n mit höchster produzierter Energiemenge durch die Steuerungseinrichtung 20 abgeschaltet. Damit lassen sich die Betriebs- und Lebenszeiten der Brennstoffzellenmodule weiter angleichen.

Damit kann nach Leistungsanforderung der Laststrom so auf die einzelnen Brennstoffzellenmodule verteilt werden, dass ihre Lebensdauer optimiert wird. Das Leistungsmanagement der Steuerungseinrichtung greift also in erster Linie bei Teillastbetrieb des Brennstoffzellensystems. Ein Grundgedanke besteht darin, bei Vollast alle in der Anlage verbauten Brennstoffzellenmodule mit ihrer maximal zulässigen Dauerlast (im allgemeinen als Nennleistung bezeichnet) zu betreiben. Wird die Last des Verbrauchers allerdings gesenkt, gibt es die Möglichkeit, nur je ein Brennstoffzellenmodul nacheinander herunterzufahren (oder ganz abzuschalten) und die übrigen bleiben am Nennlastpunkt so lange es geht. Die Erfinder haben dies jedoch als insofern nachteilig erkannt, als dass bei Brennstoffzellenmodulen, die dauerhaft am Nennlastpunkt betrieben werden, eine relativ hohe Degradationsrate vorherrscht, welche die Lebensdauer beeinträchtigt. Dem gegenüber werden erfindungsgemäß alle Brennstoffzellenmodule entsprechend der Lastanfrage gleichermaßen im vorteilhaften Teillastbereich betrieben. Ziel eines solchen Leistungsmanagements ist es, alle in der Anlage befindlichen Brennstoffzellenmodule gleich oder nahezu gleich abzunutzen und dabei jedes Modul so oft wie möglich in seinem günstigen Teillastbereich ("Wohlfühlbereich") zu betreiben. Ein solcher wurde insbesondere zwischen einer unteren Laststromdichte von näherungsweise 0,35 A/cm² und einer oberen Laststromdichte von näherungsweise 0,75 A/cm² identifiziert.

Das Leistungsmanagement der Steuerungseinrichtung steuert bei Lastanforderungen im tiefen Teillastbereich alle im Brennstoffzellensystem befindlichen Brennstoffzellenmodule vorzugsweise gleichermaßen an die Untergrenze des "Wohlfühlbereiches". Wenn die Leistungsanforderung der Last noch weniger Laststrom verlangt, beginnt die Steuerungseinrichtung einzelne Module ganz abzuschalten, und die verbliebenen Brennstoffzellenmodule wieder in den "Wohlfühlbereich" hochzufahren, so dass die Lastanforderung noch abgedeckt wird. Vorteilhaft ist im Leistungsmanagement der Steuerungseinrichtung ein Betriebsstundenzähler enthalten, der die Betriebszeit jedes Moduls über verschiedene Lastbereiche aufzeichnet, und dann auf Basis dieser Daten automatisiert entscheidet, welches Modul in einem solchen Fall heruntergefahren wird, um die Betriebszeiten aller Module anzugleichen.

Wie oben bereits näher beschrieben, werden in der Steuerungseinrichtung 20 vorteilhafterweise folgende Berechnungs- und Steuerungsaufgaben implementiert: Verarbeitung der Leistungsanforderung der Gesamtanlage (hier durch Software); Berechnung des dazu nötigen Laststromes auf Basis aller im Brennstoffzellensystem enthaltenen Brennstoffzellenmodule (hier Software); Prüfung des Ergebnisses auf Einhaltung günstiger Teillastbereich ("Wohlfühlbereich") für die einzelnen Brennstoffzellenmodule (hier Software); bei negativem Ergebnis (Unterschreitung des Teillastbereiches) Auslösung der Abschaltung des Moduls / der Module mit höchster produzierter Energiemenge (hier Software). Die Steuerungseinrichtung weist einen oder mehrere Mikroprozessoren auf, der die genannten Funktionen mit Hilfe von entsprechenden Speicher-, Interface- und anderen Hardwarekomponenten implementieren kann. Es ist jedoch auch möglich, diese Funktionen nur teilweise in der Steuerungseinrichtung 20 zu implementieren und/oder auf ein verteiltes Steuerungssystem zurückzugreifen, in dem die Funktionen auf mehrere Entitäten, wie Mikroprozessoren und deren Speicher, aufgeteilt sind.

## Patentansprüche

1. Brennstoffzellensystem (1), aufweisend:
- eine Mehrzahl von Brennstoffzellenmodulen (11 - 1n), die zu einer Brennstoffzellengruppe (10) verschaltet sind, die einen ersten und zweiten elektrischen Versorgungsanschluss (101, 102) aufweist, die dafür konfiguriert sind, an eine elektrische Last (2) angeschlossen zu werden,
- eine Messeinrichtung (21 - 2n), die mit den Brennstoffzellenmodulen (11 - 1n) verbunden ist und eingerichtet ist, einen Laststrom der jeweiligen Brennstoffzellenmodule (11 - 1n) zu messen,
- eine Steuerungseinrichtung (20) zur Erfassung eines jeweiligen Betriebszustands der Brennstoffzellenmodule (11 - 1n) anhand des von der Messeinrichtung (21 - 2n) gemessenen Laststroms des jeweiligen Brennstoffzellenmoduls, und die mit den Brennstoffzellenmodulen (11 - 1n) verbunden ist zur Steuerung des Betriebs der Brennstoffzellenmodule (11 - 1n),
- wobei die Steuerungseinrichtung (20) eingerichtet ist, einen von der Last (2) angeforderten Laststrom (I_{L}) in einem Volllastbetrieb durch Betrieb aller Brennstoffzellenmodule (11 - 1n) bereitzustellen, und einen von der Last (2) angeforderten Laststrom (I_{L}) in einem Teillastbetrieb der Last durch Betrieb aller oder eines Teils der Brennstoffzellenmodule (11 - 1n) bereitzustellen,
- wobei die Steuerungseinrichtung (20) eingerichtet ist zu detektieren, ob sich der Betriebszustand der Brennstoffzellenmodule (11 - 1n) in einem jeweiligen Teillastbereich (42) des jeweiligen Brennstoffzellenmoduls befindet, welcher durch eine untere Grenze (421) oberhalb eines Laststroms Null und eine obere Grenze (422) unterhalb eines Volllaststroms definiert ist,
- wobei die Steuerungseinrichtung (20) eingerichtet ist, einen von der Last (2) angeforderten Laststrom (I_{L}) in einem ersten Teillastbetrieb der Last durch Betrieb aller Brennstoffzellenmodule (11 - 1n) der Brennstoffzellengruppe (10) bereitzustellen derart, dass sich alle Brennstoffzellenmodule (11 - 1n) der Brennstoffzellengruppe (10) im jeweiligen Teillastbereich (42) des jeweiligen Brennstoffzellenmoduls (11 - 1n) befinden.

2. Brennstoffzellensystem nach Anspruch 1, wobei der jeweilige Teillastbereich (42) des jeweiligen Brennstoffzellenmoduls (11 - 1n) durch eine untere Laststromdichte (421) oberhalb einer Laststromdichte Null und eine obere Laststromdichte (422) unterhalb einer Volllaststromdichte definiert ist.

3. Brennstoffzellensystem nach Anspruch 2, wobei die untere Laststromdichte (421) näherungsweise 0,35 A/cm² und die obere Laststromdichte (422) näherungsweise 0,75 A/cm² beträgt.

4. Brennstoffzellensystem nach einem der Ansprüche 1 bis 3, wobei die Steuerungseinrichtung (20) eingerichtet ist, einen von der Last (2) angeforderten Laststrom (I_{L}) in einem unteren zweiten Teillastbetrieb der Last (2) durch Betrieb aller Brennstoffzellenmodule (11 - 1n) der Brennstoffzellengruppe (10) bereitzustellen derart, dass sich alle Brennstoffzellenmodule (11 - 1n) der Brennstoffzellengruppe (10) in einem Betriebszustand an der Untergrenze (421) des jeweiligen Teillastbereichs (42) des jeweiligen Brennstoffzellenmoduls befinden.

5. Brennstoffzellensystem nach Anspruch 4, wobei die Steuerungseinrichtung (20) eingerichtet ist, einen von der Last (2) angeforderten Laststrom (I_{L}) in einem gegenüber dem zweiten Teillastbetrieb noch niedrigeren dritten Teillastbetrieb der Last durch Betrieb nur eines Teils der Brennstoffzellenmodule (11 - 1n) der Brennstoffzellengruppe (10) bereitzustellen derart, dass der Betriebszustand des betriebenen Teils der Brennstoffzellenmodule (11 - 1n) sich innerhalb des jeweiligen Teillastbereichs (42) des jeweiligen Brennstoffzellenmoduls befindet und der nicht betriebene Teil der Brennstoffzellenmodule (11 - 1n) abgeschaltet ist.

6. Brennstoffzellensystem nach einem der Ansprüche 1 bis 5, wobei die Steuerungseinrichtung (20) eingerichtet ist zu detektieren, ob sich der Betriebszustand eines der Brennstoffzellenmodule (11 - 1n) der Brennstoffzellengruppe (10) in dem Teillastbereich (42) des betreffenden Brennstoffzellenmoduls befindet, und im Fall, dass detektiert wird, dass sich der Betriebszustand des Brennstoffzellenmoduls (11 - 1n) außerhalb des Teillastbereichs (42) des betreffenden Brennstoffzellenmoduls befindet, eines oder mehrere der Brennstoffzellenmodule (11 - 1n) der Brennstoffzellengruppe (10) durch die Steuerungseinrichtung (20) abgeschaltet wird.

7. Brennstoffzellensystem nach einem der Ansprüche 1 bis 6, wobei in der Steuerungseinrichtung (20) wenigstens eine Laststrom-Leistungskorrelation (30) für den Brennstoffzellentyp der jeweiligen Brennstoffzellenmodule (11 - 1n) hinterlegt ist, um den Betriebszustand des jeweiligen Brennstoffzellenmoduls (11 - 1n) zu detektieren, insbesondere wobei in der Steuerungseinrichtung (20) die Laststrom-Leistungskorrelation in Form einer Laststrom-Leistungskennlinie (30) hinterlegt ist.

8. Brennstoffzellensystem nach einem der Ansprüche 1 bis 7, wobei die Steuerungseinrichtung (20) eingerichtet ist, eine Betriebszeit eines oder mehrerer der Brennstoffzellenmodule (11 - 1n) über verschiedene Lastbereiche (41, 42, 43) aufzuzeichnen und diese aufgezeichneten Daten verarbeitet um festzulegen, welches der Brennstoffzellenmodule (11 - 1n) bei einer aktuellen Lastanforderung im Teillastbetrieb der Last (2) betrieben oder nicht betrieben wird.

9. Brennstoffzellensystem nach Anspruch 8, wobei die Steuerungseinrichtung (20) eingerichtet ist festzulegen, welches der Brennstoffzellenmodule (11 - 1n) betrieben oder nicht betrieben wird, derart, dass die Betriebszeiten der Brennstoffzellenmodule (11 - 1n) der Brennstoffzellengruppe (10) über die verschiedenen Lastbereiche (41, 42, 43) angeglichen werden.

10. Brennstoffzellensystem nach einem der Ansprüche 1 bis 9, wobei die Steuerungseinrichtung (20) eingerichtet ist, eine produzierte Energiemenge der jeweiligen Brennstoffzellenmodule (11 - 1n) zu berechnen, insbesondere wobei die Steuerungseinrichtung (20) eingerichtet ist, wenigstens für einen Teil der Brennstoffzellenmodule (11 - 1n) eine Rangfolge hinsichtlich der jeweils produzierten Energiemenge zu berechnen.

11. Brennstoffzellensystem nach Anspruch 10, wobei die Steuerungseinrichtung (20) eingerichtet ist zu detektieren, ob sich der Betriebszustand eines der Brennstoffzellenmodule (11 - 1n) in dem Teillastbereich (42) des betreffenden Brennstoffzellenmoduls befindet, und im Fall, dass detektiert wird, dass sich der Betriebszustand des Brennstoffzellenmoduls (11 - 1n) außerhalb des Teillastbereichs (42) des betreffenden Brennstoffzellenmoduls befindet, eines oder mehrere der Brennstoffzellenmodule (11 - 1n) mit höchster produzierter Energiemenge durch die Steuerungseinrichtung (20) abgeschaltet wird.

12. Verfahren zum Betrieb eines Brennstoffzellensystems (1), welches eine Mehrzahl von Brennstoffzellenmodulen (11 - 1n), die zu einer Brennstoffzellengruppe (10) verschaltet sind, die einen ersten und zweiten elektrischen Versorgungsanschluss (101, 102) aufweist, die dafür konfiguriert sind, an eine elektrische Last (2) angeschlossen zu werden, wobei das Verfahren die folgenden Schritte aufweist:
- Messung eines Laststroms der jeweiligen Brennstoffzellenmodule (11 - 1n),
- Erfassung eines jeweiligen Betriebszustands der Brennstoffzellenmodule (11 - 1n) anhand des gemessenen Laststroms des jeweiligen Brennstoffzellenmoduls,
- Bereitstellung eines von der Last (2) angeforderten Laststroms (I_{L}) in einem Volllastbetrieb durch Betrieb aller Brennstoffzellenmodule (11 - 1n) und eines von der Last (2) angeforderten Laststroms (I_{L}) in einem Teillastbetrieb der Last durch Betrieb aller oder eines Teils der Brennstoffzellenmodule (11 - 1n),
- wobei detektiert wird, ob sich der Betriebszustand eines der Brennstoffzellenmodule (11 - 1n) in einem jeweiligen Teillastbereich (42) des jeweiligen Brennstoffzellenmoduls befindet, welcher durch eine untere Grenze (421) oberhalb eines Laststroms Null und eine obere Grenze (422) unterhalb eines Volllaststroms definiert ist,
- wobei ein von der Last (2) angeforderter Laststrom (I_{L}) in einem ersten Teillastbetrieb der Last durch Betrieb aller Brennstoffzellenmodule (11 - 1n) der Brennstoffzellengruppe (10) bereitgestellt wird derart, dass sich alle Brennstoffzellenmodule (11 - 1n) der Brennstoffzellengruppe (10) im jeweiligen Teillastbereich (42) des jeweiligen Brennstoffzellenmoduls befinden.

13. Verfahren nach Anspruch 12, wobei ein von der Last (2) angeforderter Laststrom (I_{L}) in einem unteren zweiten Teillastbetrieb der Last durch Betrieb aller Brennstoffzellenmodule (11 - 1n) bereitgestellt wird derart, dass sich alle Brennstoffzellenmodule (11 - 1n) der Brennstoffzellengruppe (10) in einem Betriebszustand an der Untergrenze (421) des jeweiligen Teillastbereichs (42) des jeweiligen Brennstoffzellenmoduls befinden.

14. Verfahren nach Anspruch 12 oder 13, wobei ein von der Last (2) angeforderter Laststrom (I_{L}) in einem gegenüber dem zweiten Teillastbetrieb noch niedrigeren dritten Teillastbetrieb der Last durch Betrieb nur eines Teils der Brennstoffzellenmodule (11 - 1n) der Brennstoffzellengruppe (10) bereitgestellt wird derart, dass der Betriebszustand des betriebenen Teils der Brennstoffzellenmodule (11 - 1n) sich innerhalb des jeweiligen Teillastbereichs (42) des jeweiligen Brennstoffzellenmoduls befindet und der nicht betriebene Teil der Brennstoffzellenmodule (11 - 1n) abgeschaltet ist.

15. Verfahren nach einem der Ansprüche 12 bis 14, wobei detektiert wird, ob sich der Betriebszustand eines der Brennstoffzellenmodule (11 - 1n) der Brennstoffzellengruppe (10) in dem jeweiligen Teillastbereich (42) des jeweiligen Brennstoffzellenmoduls befindet, und im Fall, dass detektiert wird, dass sich der Betriebszustand eines der Brennstoffzellenmodule (11 - 1n) außerhalb des Teillastbereichs (42) des betreffenden Brennstoffzellenmoduls befindet, eines oder mehrere der Brennstoffzellenmodule (11 - 1n) der Brennstoffzellengruppe (10) abgeschaltet wird.

## Claims

1. A fuel cell system (1), comprising:
- a plurality of fuel cell modules (11 - 1n) connected so as to form a fuel cell group (10) having first and second electrical supply terminals (101, 102) configured to be terminated to an electrical load (2),
- a measuring device (21 - 2n) connected to the fuel cell modules (11 - 1n) and configured to measure a load current of the respective fuel cell modules (11 - 1n),
- a controller (20) for detecting a respective operating state of the fuel cell modules (11 - 1n) by way of the load current of the respective fuel cell module measured by the measuring device (21 - 2n), said controller (20) being connected to the fuel cell modules (11 - 1n) for controlling the operation of the fuel cell modules (11 - 1n),
- wherein the controller (20) is configured to provide a load current (L) demanded by the load (2) in a full-load operating mode by operating all fuel cell modules (11 - 1n), and to provide a load current (L) demanded by the load (2) in a partial-load operating mode of the load by operating all or part of the fuel cell modules (11 - 1n),
- wherein the controller (20) is configured to detect whether the operating state of the fuel cell modules (11 - 1n) is in a respective partial load range (42) of the respective fuel cell module, said partial load range (42) being defined by a lower limit (421) above a load current of zero and an upper limit (422) below a full load current,
- wherein the controller (20) is configured to provide a load current (L) demanded by the load (2) in a first partial-load operating mode of the load by operating all fuel cell modules (11 - 1n) of the fuel cell group (10) such that all fuel cell modules (11 - 1n) of the fuel cell group (10) are within the respective partial load range (42) of the respective fuel cell module (11 - 1n).

2. The fuel cell system according to claim 1,
wherein the respective partial load range (42) of the respective fuel cell module (11 - 1n) is defined by a lower load current density (421) above a load current density of zero and an upper load current density (422) below a full load current density.

3. The fuel cell system according to claim 2,
wherein the lower load current density (421) is approximately 0.35 A/cm² and the upper load current density (422) is approximately 0.75 A/cm².

4. The fuel cell system according to any of claims 1 to 3,
wherein the controller (20) is configured to provide a load current (I_{L}) demanded by the load (2) in a lower second partial-load operating mode of the load (2) by operating all fuel cell modules (11 - 1n) of the fuel cell group (10) such that all fuel cell modules (11 - 1n) of the fuel cell group (10) are in an operating state at the lower limit (421) of the respective partial load range (42) of the respective fuel cell module.

5. The fuel cell system according to claim 4,
wherein the controller (20) is configured to provide a load current (L) demanded by the load (2) in a third partial-load operating mode of the load which is still lower than the second partial load operating mode by operating only part of the fuel cell modules (11 - 1n) of the fuel cell group (10) such that the op erating state of the operated part of the fuel cell modules (11 - 1n) is within the respective partial load range (42) of the respective fuel cell module and the non-operated part of the fuel cell modules (11 - 1n) is deactivated.

6. The fuel cell system according to any of claims 1 to 5,
wherein the controller (20) is configured to detect whether the operating state of one of the fuel cell modules (11 - 1n) of the fuel cell group (10) is within the partial load range (42) of the respective fuel cell module, and in case of detection that the operating state of the fuel cell module (11 - 1n) is outside the partial load range (42) of the respective fuel cell module, one or more of the fuel cell modules (11 - 1n) of the fuel cell group (10) is deactivated by the controller (20).

7. The fuel cell system according to any of claims 1 to 6,
wherein at least one load current to power correlation (30) for the fuel cell type of the respective fuel cell modules (11 - 1n) is stored in the controller (20) in order to detect the operating state of the respective fuel cell module (11 - 1n), in particular wherein the load current to power correlation is stored in the controller (20) in the form of a load current to power characteristic (30).

8. The fuel cell system according to any of claims 1 to 7,
wherein the controller (20) is configured to record an operating time of one or more of the fuel cell modules (11 - 1n) over various load ranges (41, 42, 43) and to process these recorded data in order to determine which of the fuel cell modules (11 - 1n), at a current load demand, is operated or not operated in the partial-load operating mode of the load (2).

9. The fuel cell system according to claim 8,
wherein the controller (20) is configured to determine which one of the fuel cell modules (11 - 1n) is operated or not operated, such that the operating times of the fuel cell modules (11 - 1n) of the fuel cell group (10) are equalized over the various load ranges (41, 42, 43).

10. The fuel cell system according to any of claims 1 to 9,
wherein the controller (20) is configured to calculate a produced amount of energy of the respective fuel cell modules (11 - 1n), in particular wherein the controller (20) is configured to calculate a ranking with respect to the respective amount of energy produced at least for part of the fuel cell modules (11 - 1n).

11. The fuel cell system according to claim 10,
wherein the controller (20) is configured to detect whether the operating state of one of the fuel cell modules (11 - 1n) is in the partial load range (42) of the respective fuel cell module, and in case of detection that the operating state of the fuel cell module (11 - 1n) is outside the partial load range (42) of the respective fuel cell module, one or more of the fuel cell modules (11 - 1n) with the highest amount of energy produced is deactivated by the controller (20).

12. A method of operating a fuel cell system (1) comprising a plurality of fuel cell modules (11 - 1n) connected so as to form a fuel cell group (10) having first and second electrical supply terminals (101, 102) configured to be terminated to an electrical load (2), the method comprising the following steps:
- measuring a load current of the respective fuel cell modules (11 - 1n),
- detecting a respective operating state of the fuel cell modules (11 - 1n) by way of the load current measured of the respective fuel cell module,
- providing a load current (I_{L}) demanded by the load (2) in a full-load operating mode by operating all fuel cell modules (11 - 1n), and a load current (L) demanded by the load (2) in a partial-load operating mode of the load by op erating all or part of the fuel cell modules (11 - 1n),
- wherein it is detected whether the operating state of one of the fuel cell modules (11 - 1n) is in a respective partial load range (42) of the respective fuel cell module, said partial load range (42) being defined by a lower limit (421) above a load current of zero and an upper limit (422) below a full load current,
- wherein a load current (I_{L}) demanded by the load (2), in a first partial-load operating mode of the load, is provided by operating all fuel cell mod ules (11 - 1n) of the fuel cell group (10) such that all fuel cell modules (11 - 1n) of the fuel cell group (10) are within the respective partial load range (42) of the respective fuel cell module.

13. The method according to claim 12,
wherein a load current (I_{L}) demanded by the load (2) in a lower second partial-load operating mode of the load is provided by operating all fuel cell modules (11 - 1n), such that all fuel cell modules (11 - 1n) of the fuel cell group (10) are in an operating state at the lower limit (421) of the respective partial load range (42) of the respective fuel cell module.

14. The method according to claim 12 or 13,
wherein a load current (I_{L}) demanded by the load (2) in a third partial-load operating mode of the load which is still lower than the second partial load operating mode is provided by operating only part of the fuel cell modules (11 - 1n) of the fuel cell group (10), such that the operating state of the operated part of the fuel cell modules (11 - 1n) is within the respective partial load range (42) of the respective fuel cell module and the non-operated part of the fuel cell modules (11 - 1n) is deactivated.

15. The method according to any of claims 12 to 14,
wherein it is detected whether the operating state of one of the fuel cell mod ules (11 - 1n) of the fuel cell group (10) is in the respective partial load range (42) of the respective fuel cell module, and in case of detection that the operating state of one of the fuel cell modules (11 - 1n) is outside the partial load range (42) of the respective fuel cell module, one or more of the fuel cell modules (11 - 1n) of the fuel cell group (10) is deactivated.

## Revendications

1. Système de piles à combustible (1) présentant :
- une multitude de modules de piles à combustible (11 - 1n) qui sont connectés pour former un groupe de piles à combustible (10), groupe qui présente un premier et un deuxième raccord d'alimentation électrique (101, 102) qui sont configurés pour être raccordés à une charge électrique (2) ;
- un mécanisme de mesure (21 - 2n) qui est relié aux modules de piles à combustible (11 - 1n) et qui est conçu pour mesurer un courant de charge des modules respectifs de piles à combustible (11 - 1n) ;
- un mécanisme de commande (20) qui est destiné à l'enregistrement d'un état d'exploitation respectif des modules de piles à combustible (11 -1n) sur la base du courant de charge du module respectif de piles à combustible, qui est mesuré par le mécanisme de mesure (21 - 2n), et qui est relié aux modules de piles à combustible (11 - 1n) pour la commande de l'exploitation des modules de piles à combustible (11 - 1n) ;
- dans lequel le mécanisme de commande (20) est conçu pour procurer un courant de charge (I_{L}), qui est sollicité par la charge (2) dans une exploitation du type à pleine charge, par l'intermédiaire d'une exploitation de tous les modules de piles à combustible (11 - 1n) et pour procurer un courant de charge (I_{L}), qui est sollicité par la charge (2) dans une exploitation de la charge du type à charge partielle, par l'intermédiaire d'une exploitation de la totalité ou d'une partie des modules de piles à combustible (11 - 1n) ;
- dans lequel le mécanisme de commande (20) est conçu pour détecter le fait de savoir si l'état d'exploitation des modules de piles à combustible (11 - 1n) se trouve dans une plage respective de charge partielle (42) du module respectif de piles à combustible, plage qui est définie par une limite inférieure (421) au-dessus d'un courant de charge nul et par une limite supérieure (422) en dessous d'un courant du type à pleine charge ;
- dans lequel le mécanisme de commande (20) est conçu pour procurer un courant de charge (I_{L}), qui est sollicité par la charge (2) dans une première exploitation de la charge du type à charge partielle, par l'intermédiaire d'une exploitation de tous les modules de piles à combustible (11 - 1n) du groupe de piles à combustible (10), d'une manière telle que tous les modules de piles à combustible (11 - 1n) du groupe de piles à combustible (10) se trouvent dans la plage respective de charge partielle (42) du module respectif de piles à combustible (11 - 1n).

2. Système de piles à combustible selon la revendication 1, dans lequel la plage respective de charge partielle (42) du module respectif de piles à combustible (11 - 1n) est définie par une densité de courant de charge inférieure (421) au-dessus d'une densité de courant de charge nulle et par une densité de courant de charge supérieure (422) en dessous d'une densité de courant du type à pleine charge.

3. Système de piles à combustible selon la revendication 2, dans lequel la densité de courant de charge inférieure (421) s'élève à approximativement 0,35 A/cm² et la densité de courant de charge supérieure (422) s'élève à approximativement 0,75 A/cm².

4. Système de piles à combustible selon l'une quelconque des revendications 1 à 3, dans lequel le mécanisme de commande (20) est conçu pour procurer un courant de charge (I_{L}), qui est sollicité par la charge (2) dans une deuxième exploitation inférieure de la charge du type à charge partielle, par l'intermédiaire d'une exploitation de tous les modules de piles à combustible (11 - 1n) du groupe de piles à combustible (10), d'une manière telle que tous les modules de piles à combustible (11 - 1n) du groupe de piles à combustible (10) se trouvent dans un état d'exploitation à la limite inférieure (421) de la plage respective de charge partielle (42) du module respectif de piles à combustible.

5. Système de piles à combustible selon la revendication 4, dans lequel le mécanisme de commande (20) est conçu pour procurer un courant de charge (I_{L}), qui est sollicité par la charge (2) dans une troisième exploitation de la charge du type à charge partielle encore inférieure par rapport à la deuxième exploitation du type à charge partielle, par l'intermédiaire d'une exploitation de seulement une partie des modules de piles à combustible (11 - 1n) du groupe de piles à combustible (10) d'une manière telle que l'état d'exploitation de la partie mise en service des modules de piles à combustible (11 - 1n) se trouve au sein de la plage respective de charge partielle (42) du module respectif de piles à combustible et que la partie des modules de piles à combustible (11 - 1n) qui n'est pas mise en service est mise hors circuit.

6. Système de piles à combustible selon l'une quelconque des revendications 1 à 5, dans lequel le mécanisme de commande (20) est conçu pour détecter le fait de savoir si l'état d'exploitation d'un des modules de piles à combustible (11 - 1n) du groupe de piles à combustible (10) se trouve dans la plage de charge partielle (42) du module de piles à combustible concerné, et dans le cas où il est détecté que l'état d'exploitation du module de piles à combustible (11 - 1n) se trouve en dehors de la plage de charge partielle (42) du module de piles à combustible concerné, un module ou plusieurs modules parmi les modules de piles à combustible (11 - 1n) du groupe de piles à combustible (10) est/sont mis en circuit par l'intermédiaire du mécanisme de commande (20).

7. Système de piles à combustible selon l'une quelconque des revendications 1 à 6, dans lequel, dans le mécanisme de commande (20), est déposée au moins une corrélation courant de charge-puissance (30) pour le type de piles à combustible du module respectif de piles à combustible (11 - 1n), dans le but de détecter l'état d'exploitation du module respectif de piles à combustible (11 - 1n) ; en particulier dans lequel, dans le mécanisme de commande (20) est déposée la corrélation courant de charge-puissance sous la forme d'une courbe courant de charge-puissance (30).

8. Système de piles à combustible selon l'une quelconque des revendications 1 à 7, dans lequel le mécanisme de commande (20) est conçu pour enregistrer une durée d'exploitation d'un module ou de plusieurs modules parmi les modules de piles à combustible (11 - 1n) sur différentes plages de charge (41, 42, 43), et traite ces données enregistrées dans le but de déterminer le module de piles à combustible (11 - 1n) qui est exploité ou qui n'est pas exploité dans le cadre d'une sollicitation de charge réelle dans l'exploitation de la charge (2) du type à charge partielle.

9. Système de piles à combustible selon la revendication 8, dans lequel le mécanisme de commande (20) est conçu pour déterminer le module de piles à combustible (11 - 1n) qui est exploité ou qui n'est pas exploité, d'une manière telle que les durées d'exploitation des modules de piles à combustible (11 - 1n) du groupe de piles à combustible (10) sont comparées sur les différentes plages de charge (41, 42, 43).

10. Système de piles à combustible selon l'une quelconque des revendications 1 à 9, dans lequel le mécanisme de commande (20) est conçu pour calculer une quantité d'énergie produite du module respectif de piles à combustible (11 - 1n) ; en particulier dans lequel le mécanisme de commande (20) est conçu pour calculer, au moins pour une partie des modules de piles à combustible (11 - 1n), un ordre de priorité en ce qui concerne la quantité d'énergie respectivement produite.

11. Système de piles à combustible selon la revendication 10, dans lequel le mécanisme de commande (20) est conçu pour détecter le fait de savoir si l'état d'exploitation d'un des modules de piles à combustible (11 - 1n) se trouve dans la plage de charge partielle (42) du module de piles à combustible concerné, et dans le cas où il est détecté que l'état d'exploitation du module de piles à combustible (11 - 1n) se trouve en dehors de la plage de charge partielle (42) du module de piles à combustible concerné, un module ou plusieurs modules parmi les modules de piles à combustible (11 - 1n) présentant la quantité d'énergie produite la plus élevée est/sont mis hors circuit par l'intermédiaire du mécanisme de commande (20).

12. Procédé destiné à l'exploitation d'un système de piles à combustible (1) présentant une multitude de modules de piles à combustible (11 - 1n) qui sont connectés pour former un groupe de piles à combustible (10), le groupe en question présentant un premier et un deuxième raccord d'alimentation électrique (101, 102) qui sont configurés pour être raccordés à une charge électrique (2) ; dans lequel le procédé présente les étapes suivantes dans lesquelles :
- on mesure un courant de charge des modules respectifs de piles à combustible (11 - 1n) ;
- on enregistre un état d'exploitation respectif des modules de piles à combustible (11 - 1n) sur la base du courant de charge du module respectif de piles à combustible, qui a été mesuré ;
- on procure un courant de charge (I_{L}), qui est sollicité par la charge (2) dans une exploitation du type à pleine charge, par l'intermédiaire d'une exploitation de tous les modules de piles à combustible (11 - 1n) et un courant de charge (I_{L}), qui est sollicité par la charge (2) dans une exploitation du type à charge partielle, par l'intermédiaire d'une exploitation de la totalité ou d'une partie des modules de piles à combustible (11 - 1n) ;
- dans lequel on détecte le fait de savoir si l'état d'exploitation d'un des modules de piles à combustible (11 - 1n) se trouve dans une plage respective de charge partielle (42) du module respectif de piles à combustible, plage qui est définie par une limite inférieure (421) au-dessus d'un courant de charge nul et par une limite supérieure (422) en dessous d'un courant du type à pleine charge ;
- dans lequel on procure un courant de charge (I_{L}), qui est sollicité par la charge (2) dans une première exploitation de la charge du type à charge partielle, par l'intermédiaire d'une exploitation de tous les modules de piles à combustible (11 - 1n) du groupe de piles à combustible (10), d'une manière telle que tous les modules de piles à combustible (11 - 1n) du groupe de piles à combustible (10) se trouvent dans la plage respective de charge partielle (42) du module respectif de piles à combustible.

13. Procédé selon la revendication 12, dans lequel on procure un courant de charge (I_{L}), qui est sollicité par la charge (2) dans une deuxième exploitation inférieure de la charge du type à charge partielle, par l'intermédiaire d'une exploitation de tous les modules de piles à combustible (11 - 1n) du groupe de piles à combustible (10), d'une manière telle que tous les modules de piles à combustible (11 - 1n) du groupe de piles à combustible (10) se trouvent dans un état d'exploitation à la limite inférieure (421) la plage respective de charge partielle (42) du module respectif de piles à combustible.

14. Procédé selon la revendication 12 ou 13, dans lequel on 200procure un courant de charge (I_{L}), qui est sollicité par la charge (2) dans une troisième exploitation de la charge du type à charge partielle encore inférieure par rapport à la deuxième exploitation du type à charge partielle, par l'intermédiaire d'une exploitation de seulement une partie des modules de piles à combustible (11 - 1n) du groupe de piles à combustible (10), d'une manière telle que l'état d'exploitation de la partie mise en service des modules de piles à combustible (11 - 1n) se trouve au sein de la plage respective de charge partielle (42) du module respectif de piles à combustible et que la partie inexploitée des modules de piles à combustible (11 - 1n) est mise hors circuit.

15. Procédé selon l'une quelconque des revendications 12 à 14, dans lequel on détecte le fait de savoir si l'état d'exploitation d'un des modules de piles à combustible (11 - 1n) du groupe de piles à combustible (10) se trouve dans la plage respective de charge partielle (42) du module respectif de piles à combustible, et dans le cas où il est détecté que l'état d'exploitation d'un module parmi les modules de piles à combustible (11 - 1n) se trouve en dehors de la plage de charge partielle (42) du module de piles à combustible concerné, un module ou plusieurs modules parmi les modules de piles à combustible (11 - 1n) du groupe de piles à combustible (10) est/sont mis en circuit.
